# EUROPEAN PATENT SPECIFICATION

(11) **EP 3 395 869 B1**
(45) Date of publication and mention of the grant of the patent: **23.09.2020**
(21) Application number: 16878339.7
(22) Date of filing: 06.12.2016
(51) Int. Cl.: C08J 5/24, C08F 290/06, C09J 4/06

(54) **PREPREG AND MOLDED ARTICLE**
PREPREG UND FORMKÖRPER
PRÉIMPRÉGNÉ ET ARTICLE MOULÉ

(30) Priority: 21.12.2015 JP 2015248551
(43) Date of publication of application: 31.10.2018
(73) Proprietor: DIC Corporation, Tokyo 174-8520 (JP)
(72) Inventor: SHINCHI, Tomoaki, Takaishi-shi Osaka 592-0001 (JP); YASUMURA, Takashi, Takaishi-shi Osaka 592-0001 (JP); KIMURA, Makoto, Ichihara-shi Chiba 290-8585 (JP)
(74) Representative: TBK
(86) International application number: PCT/JP2016/086167
(87) International publication number: WO 2017/110446

(56) References cited:
- JP-A- S5 388 874
- JP-A- S5 962 639
- JP-A- 2006 045 404
- JP-A- 2006 052 271
- JP-A- 2009 013 306
- JP-A- 2011 068 794

## Description

### Technical Field

The present invention relates to a prepreg that has good workability and good moldability and that can be used to provide a molded article having various excellent physical properties such as interlaminar shear strength and heat resistance, and a molded article produced therefrom.

### Background Art

Fiber-reinforced resin composite materials reinforced with reinforced fibers such as carbon fibers or glass fibers have been receiving attention because of their characteristics, i.e., good heat resistance and good mechanical strength despite their lightness. They have been more widely used in various structural applications such as chassis and various members of automobiles and aircrafts. As a method for molding such a fiber-reinforced resin composite material, for example, a method is employed in which an intermediate material called a prepreg, in which reinforcing fibers are impregnated with a thermosetting resin, is cured and molded by autoclave molding or press molding.

Typically, resins for prepregs are required to have both stability at normal temperature and curability by heating or the like. Thus, in general, thermosetting resins such as epoxy resin compositions have often been used. Prepregs containing epoxy resins, however, disadvantageously need to be stored at low temperatures because curing proceeds at normal temperature.

### Citation List

### Patent Literature

PTL 1: Japanese Unexamined Patent Application
Publication No. 2006-152161
PTL 2: JP S53 88874

To solve this problem, there have been advances in the development of a radically polymerizable resin composition that can be efficiently produced and that can have high stability at normal temperature (for example, see PTL 1). This radically polymerizable resin composition contains a radically polymerizable resin containing a tri(meth)acrylate compound having a specific structure, a (meth)acrylic acid adduct of bisphenol A diglycidyl ether, and di(meth)acrylate compound having a specific structure as essential components. However, this radically polymerizable resin composition has the disadvantages that ultraviolet curing is required in order to improve the workability (tackiness) of a prepreg and that a molded article has an insufficient interlayer adhesion.

Thus, there is a need for a material that has good workability and that can be used to provide a molded article having various excellent physical properties such as interlaminar shear strength.

### Summary of Invention

### Technical Problem

It is an object of the present invention to provide a prepreg that has good workability and good moldability and that can be used to provide a molded article having various excellent physical properties such as interlaminar shear strength and heat resistance, and a molded article therefrom.

### Solution to Problem

The inventors have found that a prepreg containing a specific urethane-modified epoxy (meth)acrylate, an unsaturated monomer, a polymerization initiator, and reinforcing fibers as essential components has good workability and good moldability and that the use of the prepreg provides a molded article having various excellent physical properties such as interlaminar shear strength and heat resistance. This finding has led to the completion of the present invention.

The present invention relates to a prepreg and a molded article produced therefrom, the prepreg including a urethane-modified epoxy (meth)acrylate (A) that is a reaction product of an epoxy (meth)acrylate (a1) having an average of 1.8 to 2.6 hydroxy groups per molecule and a polyisocyanate (a2) having an average of 2 to 3 isocyanate groups per molecule, an ethylenically unsaturated monomer (B), a polymerization initiator (C), and reinforcing fibers (D) as essential components, in which the molar ratio (NCO/OH) of isocyanate groups (NCO) in the polyisocyanate (a2) to hydroxy groups in the epoxy (meth)acrylate (a1) is 0.6 to 1.1, the proportion of the ethylenically unsaturated monomer (B) in the total mass of the epoxy (meth)acrylate (a1) and the ethylenically unsaturated monomer (B) is 10% to 50% by mass, and the ethylenically unsaturated monomer (B) is a monofunctional (meth)acrylate having a molecular weight of 150 to 250, and the reinforcing fibers (D) are carbon fibers and/or glass fibers.

### Advantageous Effects of Invention

The molded article produced from the prepreg of the present invention has good interlaminar shear strength, good heat resistance, and so forth and thus can be appropriately used for, for example, automotive members, members of railway rolling stock, members of aerospace planes, ship members, members of household equipment, members for sports, members of light vehicles, building and civil engineering members, and cases for office automation equipment.

### Description of Embodiments

A prepreg of the present invention includes a urethane-modified epoxy (meth)acrylate (A) that is a reaction product of an epoxy (meth)acrylate (a1) having an average of 1.8 to 2.6 hydroxy groups per molecule and a polyisocyanate (a2) having an average of 2 to 3 isocyanate groups per molecule, an ethylenically unsaturated monomer (B), a polymerization initiator (C), and reinforcing fibers (D) as essential components, in which the molar ratio (NCO/OH) of isocyanate groups (NCO) in the polyisocyanate (a2) to hydroxy groups in the epoxy (meth)acrylate (a1) is 0.6 to 1.1, the proportion by mass of the ethylenically unsaturated monomer (B) in the components is 10% to 50% by mass, and the ethylenically unsaturated monomer (B) is a monofunctional (meth)acrylate having a molecular weight of 150 to 250, and the reinforcing fibers (D) are carbon fibers and/or glass fibers.

The urethane-modified epoxy (meth)acrylate (A) is a reaction product of the epoxy (meth)acrylate (a1) having an average of 1.8 to 2.6 hydroxy groups per molecule and the polyisocyanate (a2) having an average of 2 to 3 isocyanate groups per molecule. When the epoxy (meth)acrylate (a1) has an average of less than 1.8 hydroxy groups, a high-molecular-weight polymer cannot be formed by a chain extension reaction, thus leading to insufficient workability (tackiness). When the epoxy (meth)acrylate (a1) has an average of more than 2.6 hydroxy groups, a network polymer is formed by a crosslinking reaction to decrease the flowability of the resin, thus decreasing the interlayer adhesion and the interlaminar shear strength of a molded article. When the polyisocyanate (a2) has an average of more than 3 isocyanate groups per molecule, a network polymer is formed by a crosslinking reaction to decrease the flowability of the resin, thus possibly decreasing the interlayer adhesion and the interlaminar shear strength of a molded article.

Because the workability (tackiness), the moldability, and the interlaminar shear strength of a molded article are further improved, the total average number of functional groups, i.e., the sum of the average number of hydroxy groups in the epoxy (meth)acrylate (a1) per molecule and the average number of isocyanate groups in the polyisocyanate (a2) per molecule, is preferably 4 to 5. When the total average number of functional groups is less than 4, a high-molecular-weight polymer cannot be formed by a chain extension reaction, thus leading to insufficient workability (tackiness). When the total average number of functional groups is more than 5, a network polymer is formed by a crosslinking reaction to decrease the flowability of the resin. This can lead to insufficient interlayer adhesion and a molded article having voids, thus possibly decreasing the interlaminar shear strength.

In the present invention, the term "(meth)acrylate" refers to one or both of acrylate and methacrylate, and the term "(meth)acrylic acid" refers to one or both of acrylic acid and methacrylic acid.

The epoxy (meth)acrylate (a1) can be prepared by the reaction of an epoxy resin and (meth)acrylic acid and/or (meth)acrylic anhydride. Regarding an example of a method for obtaining an average of 1.8 to 2.6 hydroxy groups per molecule, the average number of hydroxy groups can be controlled by adjusting the average number of epoxy groups and the average number of hydroxy groups in the epoxy resin and the number of moles of (meth)acrylic acid and/or (meth)acrylic anhydride at the time of reaction.

Examples of the epoxy resin include bisphenol-type epoxy resins such as bisphenol A-type epoxy resins, bisphenol F-type epoxy resins, bisphenol fluorene-type epoxy resins, and a biscresol fluorene type; novolac-type epoxy resins such as phenol novolac-type epoxy resins and cresol novolac-type epoxy resins; glycidyl ethers of phenol such as oxazolidone-modified epoxy resins and brominated epoxy resins of these resins; diglycidyl ethers of polyhydric alcohols such as dipropylene glycol diglycidyl ether, trimethylolpropane triglycidyl ether, diglycidyl ether of an alkylene oxide adduct of bisphenol A, and diglycidyl ether of hydrogenated bisphenol A; alicyclic epoxy resins such as 3,4-epoxy-6-methylcyclohexylmethyl-3,4-epoxy-6-methylcyclohexane carboxylate, and 1-epoxyethyl-3,4-epoxycyclohexane; glycidyl esters such as diglycidyl phthalate, diglycidyl tetrahydrophthalate, diglycidyl p-oxybenzoate, and glycidyl dimerate; glycidylamines such as tetraglycidyldiaminodiphenylmethane, tetraglycidyl-m-xylenediamine, triglycidyl-p-aminophenol, and N,N-diglycidylaniline; and heterocyclic epoxy resins such as 1,3-diglycidyl-5,5-dimethylhydantoin, and triglycidyl isocyanurate. Among these, because a molded article having higher mechanical strength and heat resistance is obtained, a bisphenol-type epoxy resin, a novolac-type epoxy resin, or an oxazolidone-modified epoxy resin is more preferred. Furthermore, because a molded article having a good balance between interlaminar shear strength and mechanical strength is obtained, a bisphenol-type epoxy resin or an oxazolidone-modified epoxy resin is more preferred. The epoxy resins preferably have an epoxy equivalent of 150 to 400 in view of heat resistance and curability. These epoxy resins may be used alone or in combination of two or more.

The reaction of the epoxy resin and (meth)acrylic acid is preferably performed at 60°C to 140°C in the presence of an esterification catalyst. A polymerization inhibitor or the like may also be used.

The polyisocyanate (a2) has an average of 2 to 3 isocyanate groups per molecule. Examples of a polyisocyanate that can be used include diphenylmethane diisocyanate (4,4'-configuration, 2,4'-configuration, 2,2'-configuration, or mixtures thereof), modified diphenylmethane diisocyanates such as carbodiimide-, nurate-, biuret-, urethaneimine-, and polyol-modified diphenylmethane diisocyanates, the polyol having a number-average molecular weight of 1,000 or less, e.g., diethylene glycol or dipropylene glycol; aromatic polyisocyanates such as tolylene diisocyanate, tolidine diisocyanate, polymethylenepolyphenyl polyisocyanate, xylylene diisocyanate, 1,5-naphthalene diisocyanate, and tetramethylxylene diisocyanate; alicyclic polyisocyanates such as isophorone diisocyanate, hydrogenated diphenylmethane diisocyanate, hydrogenated xylylene diisocyanate, and norbornene diisocyanate; aliphatic polyisocyanates such as hexamethylene diisocyanate, nurate- and biuret-modified hexamethylene diisocyanates, hexamethylene diisocyanate adducts, and dimer acid diisocyanate. These polyisocyanates (a2) may be used alone or in combination of two or more.

Hereinafter, diphenylmethane diisocyanate is abbreviated as "MDI", and hexamethylene diisocyanate is abbreviated as "HDI".

The molar ratio (NCO/OH) of isocyanate groups (NCO) in the polyisocyanate (a2) to hydroxy groups (OH) of the epoxy (meth)acrylate (a1) is 0.6 to 1.1. Because a better balance between workability (tackiness) obtained by an increase in molecular weight using a chain extension reaction and the flowability of the resin is provided, the molar ratio is preferably 0.7 to 1.0.

The proportion by mass of the ethylenically unsaturated monomer (B) in the total mass of the epoxy (meth)acrylate (a1) and the ethylenically unsaturated monomer (B) in the present invention is 10% to 50% by mass. Because a balance among workability (tackiness), heat resistance, and curability is further improved, the proportion by mass is preferably 20% to 40% by mass.

Examples of the ethylenically unsaturated monomer (B) include styrene compounds such as styrene, methylstyrene, halogenated styrene, and divinylbenzene; monofunctional (meth)acrylates such as methyl (meth)acrylate, ethyl (meth)acrylate, propyl (meth)acrylate, butyl (meth)acrylate, 2-ethylhexyl (meth)acrylate, cyclohexyl (meth)acrylate, isobornyl (meth)acrylate, benzyl (meth)acrylate, methylbenzyl (meth)acrylate, phenoxyethyl (meth)acrylate, methylphenoxyethyl (meth)acrylate, morpholine (meth)acrylate, phenylphenoxyethyl acrylate, phenybenzyl (meth)acrylate, phenyl methacrylate, dicyclopentenyl (meth)acrylate, dicyclopentenyloxyethyl (meth)acrylate, and dicyclopentanyl methacrylate; hydroxy group-containing (meth)acrylates such as hydroxyethyl (meth)acrylate, hydroxypropyl (meth)acrylate, and hydroxybutyl (meth)acrylate; and di(meth)acrylate compounds such as ethylene glycol di(meth)acrylate, propylene glycol di(meth)acrylate, 1,4-butanediol di(meth)acrylate, 1,6-hexanediol di(meth)acrylate, bisphenol di(meth)acrylate, and 1,4-cyclohexanedimethanol di(meth)acrylate. These may be used alone or in combination of two or more.

In view of an odor in a work environment, the handling of a hazardous material, and the mechanical strength and the heat resistance of a molded article, a monofunctional (meth)acrylate having a molecular weight of 150 to 250 is used. Phenoxyethyl (meth)acrylate, methylphenoxyethyl (meth)acrylate, benzyl (meth)acrylate, or methylbenzyl (meth)acrylate is preferred. Phenoxyethyl (meth)acrylate or benzyl (meth)acrylate is more preferred.

The polymerization initiator (C) is preferably, but not necessarily, an organic peroxide. Examples thereof include diacyl peroxide compounds, peroxy ester compounds, hydroperoxide compounds, ketone peroxide compounds, alkyl perester compounds, percarbonate compounds, and peroxyketals. These may be selected, depending on molding conditions. These polymerization initiators (C) may be used alone or in combination of two or more.

Among these, a polymerization initiator having a 10-hour half-life temperature of 70°C or higher and 100°C or lower is preferably used in order to reduce the molding time. When the polymerization initiator has a 10-hour half-life temperature of 70°C or higher and 100°C or lower, the prepreg has a long life at normal temperature and can be cured by heating in a short time (within 5 minutes); thus, the polymerization initiator is preferred. A combination of the polymerization initiator and the prepreg of the present invention results in better curability and moldability. Examples of such a polymerization initiator include 1,6-bis(t-butylperoxycarbonyloxy)hexane, 1,1-bis(t-butylperoxy)cyclohexane, 1,1-bis(t-amylperoxy)cyclohexane, 1,1-bis(t-hexylperoxy)cyclohexane, t-butylperoxydiethyl acetate, t-butylperoxyisopropyl carbonate, t-amylperoxyisopropyl carbonate, t-hexylperoxyisopropyl carbonate, di-tert-butylperoxyhexahydroterephthalate, t-amyl peroxytrimethylhexanoate, and t-hexyl peroxy-2-ethylhexanoate.

The content of the polymerization initiator (C) is preferably in the range of 0.3% to 3% by mass with respect to the total amount of the epoxy (meth)acrylate (a1) and the ethylenically unsaturated monomer (B) because good curing characteristics and good storage stability are both provided.

Examples of the reinforcing fibers (D) include carbon fibers, glass fibers, silicon carbide fibers, alumina fibers, boron fibers, metal fibers, and organic fibers such as aramid fibers, vinylon fibers, and Tetoron fibers. Because a molded article having higher strength and higher elasticity is provided, carbon fibers or glass fibers are used. Carbon fibers are more preferred. These reinforcing fibers (D) may be used alone or in combination of two or more.

As the carbon fibers, various carbon fibers such as polyacrylonitrile-, pitch-, and rayon-based carbon fibers can be used. Of these, because high-strength carbon fibers are easily provided, polyacrylonitrile-based carbon fibers are preferred.

The form of the reinforcing fibers (D) is not particularly limited. Examples thereof include reinforcing fiber tow in which reinforcing fiber filaments are bundled together, a unidirectional material formed of the reinforcing fiber tow aligned in one direction, woven fabrics, and nonwoven fabrics formed of short reinforcing fibers made by cutting. The unidirectional material is preferably used as reinforcing fibers because the unidirectional material is stacked and molded to provide high mechanical properties.

Examples of woven fabrics include plain fabrics, twill fabrics, satin fabrics, and stitched sheets, such as non-crimp fabrics, in which sheets formed of fiber bundles aligned in one direction or sheets stacked at different stacking angles are stitched together in order not to be separated.

The weight of the reinforcing fibers (weight per square meter of the fibers) is preferably, but not necessarily, 10 g/m² to 650 g/m². A weight of 10 g/m² or more results in reduced variations in fiber width to provide good mechanical properties and thus is preferred. A weight of 650 g/m² or less results in good impregnation of a resin and thus is preferred. The weight is more preferably 50 to 500 g/m², particularly preferably 50 to 300 g/m².

The content of the reinforcing fibers (D) in components of the prepreg of the present invention is preferably in the range of 25% to 80% by mass, more preferably 40% to 70% by mass because the resulting molded article has further improved mechanical strength.

Regarding the components in the prepreg of the present invention, a component other than the urethane-modified epoxy (meth)acrylate (A), the ethylenically unsaturated monomer (B), the polymerization initiator (C), and the reinforcing fibers (D) may be used. Examples of the component that may be contained include thermosetting resins other than the urethane-modified epoxy (meth)acrylates, thermoplastic resins, polymerization inhibitors, curing accelerators, fillers, low profile additives, release agents, thickeners, thinners, pigments, antioxidants, plasticizers, flame retardants, antimicrobial agents, ultraviolet stabilizers, reinforcing materials, and photo-curing agents.

Examples of the thermosetting resins include vinyl ester resins, vinyl urethane resins, unsaturated polyester resins, phenolic resins, melamine resins, and furan resins. These thermosetting resins may be used alone or in combination of two or more.

Examples of the thermoplastic resins include polyamide resins, poly(ethylene terephthalate) resins, poly(butylene terephthalate) resins, polycarbonate resins, urethane resins, polypropylene resins, polyethylene resins, polystyrene resins, acrylic resins, polybutadiene resins, polyisoprene resins, and resins prepared by modification of these resins using, for example, copolymerization. These thermoplastic resins may be used alone or in combination of two or more.

Examples of the polymerization inhibitors include hydroquinone, trimethylhydroquinone, p-t-butylcatechol, t-butylhydroquinone, toluhydroquinone, p-benzoquinone, naphthoquinone, hydroquinone monomethyl ether, phenothiazine, copper naphthenate, and copper chloride. These polymerization initiators may be used alone or in combination of two or more.

Examples of the curing accelerators include metal soaps such as cobalt naphthenate, cobalt octenoate, vanadyl octenoate, copper naphthenate, and barium naphthenate; and metal chelate compounds such as vanadyl acetylacetate, cobalt acetylacetate, and iron acetylacetonate. Examples of amines include N,N-dimethylamino-p-benzaldehyde, N,N-dimethylaniline, N,N-diethylaniline, N,N-dimethyl-p-toluidine, N-ethyl-m-toluidine, triethanolamine, m-toluidine, diethylenetriamine, pyridine, phenylmorpholine, piperidine, and diethanolaniline. These curing accelerators may be used alone or in combination of two or more.

As the fillers, an inorganic compound or an organic compound can be used in order to adjust, for example, the strength, the elastic modulus, the impact strength, and the fatigue endurance of the molded article.

Examples of the inorganic compound include calcium carbonate, magnesium carbonate, barium sulfate, mica, talc, kaolin, clay, Celite, asbestos, barite, baryta, silica, quartz sand, dolomite limestone, gypsum, fine aluminum powders, hollow balloons, alumina, glass powders, aluminum hydroxide, Kansuiseki (Japanese marble), zirconium oxide, antimony trioxide, titanium oxide, molybdenum dioxide, and iron powders.

Examples of the organic compound include powders of natural polysaccharides such as cellulose and chitin; and powders of synthetic resins. As the synthetic resins, powders of organic materials, such as hard resins, soft rubber, elastomers, or polymers (copolymers), or particles having multilayer structures such as core-shell structures can be used. Specific examples thereof include butadiene rubber and/or acrylic rubber particles, urethane rubber particles, silicon rubber particles, polyimide resin powders, fluororesin powders, and phenolic resin powders. These fillers may be used alone or in combination of two or more.

Examples of the release agents include zinc stearate, calcium stearate, paraffin wax, polyethylene wax, and carnauba wax. Preferred examples thereof include paraffin wax, polyethylene wax, and carnauba wax. These release agents may be used alone or in combination of two or more.

Examples of the thickeners include metal oxides and metal hydroxides, such as magnesium oxide, magnesium hydroxide, calcium oxide, and calcium hydroxide; and acrylic resin-based fine particles. These can be appropriately selected, depending on the handleability of the prepreg of the present invention. These thickeners may be used alone or in combination of two or more.

The prepreg of the present invention is produced by step 1 of mixing a polymerization initiator and the polymerization initiator (C) to a resin solution containing the epoxy (meth)acrylate (a1) and the ethylenically unsaturated monomer (B) with a known mixer such as a planetary mixer or a kneader and then mixing the polyisocyanate (a2) thereto to prepare a resin composition (X), step 2 of applying the resin composition (X) to a release PET film with, for example, a doctor knife or a flow coater to a thickness of, preferably 10 to 650 µm, impregnating the reinforcing fibers (D) therewith, arranging a release PET film on an upper surface, and performing rolling with a rolling mill to form a sheet, and step 3 of allowing the sheet to stand at normal temperature to 50°C to react the hydroxy groups in the epoxy (meth)acrylate (a1) and the isocyanate groups in the polyisocyanate (a2).

The prepreg of the present invention preferably has a thickness of 0.02 to 1 mm. A thickness of 0.02 mm or more facilitates the handling to perform stacking and thus is preferred. A thickness of 1 mm or less results in good impregnation with the resin and thus is preferred. More preferably, the thickness is 0.05 to 0.5 mm.

As an example of a method for producing a molded article from the resulting prepreg described above, the following method is employed: The release PET films are peeled from the prepreg. After 8 to 16 prepreg sheets are stacked, the resulting stack is placed in a die that has been heated at 110°C to 160°C in advance and is clamped with a compression molding machine to shape the prepreg with a molding pressure of 0.1 to 10 MPa maintained, thereby curing the prepreg. The resulting molded article is then removed. In this case, a production method is preferred in which the stack is subjected to thermocompression molding in a die set having a shear edge at a die temperature of 120°C to 160°C for a specified time of 1 to 2 minutes per millimeter of the thickness of the molded article under a molding pressure of 1 to 8 MPa.

The molded article produced from the prepreg of the present invention has good interlaminar shear strength, heat resistance, and so forth and thus can be appropriately used for, for example, automotive members, members of railway rolling stock, members of aerospace planes, ship members, members of household equipment, members for sports, members of light vehicles, building and civil engineering members, and cases for office automation equipment.

### EXAMPLES

The present invention will be described in more detail below by specific examples. The term "hydroxyl value" refers to the number of milligrams of potassium hydroxide (mgKOH/g) required to neutralize acetic acid formed when 1 g of a resin sample is reacted with an acetylating agent at a specified temperature for a specified time according to a method specified in JIS K-0070.

### (Synthesis Example 1: Synthesis of Epoxy Methacrylate (a1-1))

Into a 1 L flask equipped with a thermometer, an inlet tube for nitrogen and air, and an stirrer, 380 g of an epoxy resin ("Epiclon 850-S", bisphenol A-type epoxy resin, epoxy equivalent: 190, available from DIC Corporation), 170 g of methacrylic acid, 0.16 g of t-butylhydroquinone were charged. The resulting mixture was heated to 90°C under a stream of a nitrogen-air (1:1) gas mixture. Then 1.1 g of tris(dimethylamino)phenol was added thereto. The mixture was heated to 110°C to react the mixture for 10 hours. At this time, because the acid value reached 4 or less, the reaction was terminated. After cooling to about 60°C, the reaction product was removed from the reaction container to give epoxy methacrylate (a1-1). The average number of functional groups (hydroxy groups) in the resin was determined from the composition distribution of epoxy used and found to be 2.2. The resin had a hydroxyl value of 223 mgKOH/g.

### (Synthesis Example 2: Synthesis of Epoxy Methacrylate (a1-2))

Into a flask similar to that used in Synthesis example 1, 340 g of an epoxy resin ("Epiclon 850-CRP", bisphenol A-type epoxy resin, epoxy equivalent: 170, available from DIC Corporation), 170 g of methacrylic acid, 0.15 g of t-butylhydroquinone were charged. The resulting mixture was heated to 90°C under a stream of a nitrogen-air (1:1) gas mixture. Then 0.8 g of tris(dimethylamino)phenol was added thereto. The mixture was heated to 110°C to react the mixture for 9 hours. At this time, because the acid value reached 4 or less, the reaction was terminated. After cooling to about 60°C, the reaction product was removed from the reaction container to give epoxy methacrylate (a1-2). The average number of functional groups (hydroxy groups) in the resin was determined from the composition distribution of epoxy used and found to be 2.0. The resin had a hydroxyl value of 220 mgKOH/g.

### (Synthesis Example 3: Synthesis of Epoxy Methacrylate (Ra1-1))

Into a flask similar to that used in Synthesis example 1, 475 g of an epoxy resin ("Epiclon 1055", bisphenol A-type epoxy resin, epoxy equivalent: 475, available from DIC Corporation), 86 g of methacrylic acid, 0.16 g of t-butylhydroquinone were charged. The resulting mixture was heated to 90°C under a stream of a nitrogen-air (1:1) gas mixture. Then 1.0 g of tris(dimethylamino)phenol was added thereto. The mixture was heated to 110°C to react the mixture for 10 hours. At this time, because the acid value reached 4 or less, the reaction was terminated. After cooling to about 90°C, the reaction product was removed from the reaction container to give epoxy methacrylate (Ra1-1). The average number of functional groups (hydroxy groups) in the resin was determined from the composition distribution of epoxy used and found to be 4.1. The resin had a hydroxyl value of 205 mgKOH/g.

### (Example 1: Production and evaluation of Prepreg (1))

First, 0.02 parts of p-benzoquinone and 1 part of a polymerization initiator ("Kayacarbon AIC-75", organic peroxide, available from Kayaku Akzo Corporation) were mixed with 100 parts by mass of a liquid resin mixture of a 70 parts by mass of epoxy methacrylate (a1-1) prepared in Synthesis example 1 and 30 parts by mass of phenoxyethyl methacrylate. The mixture was mixed with 27.8 parts by mass of 4,4'-MDI (average number of isocyanate groups per molecule: 2, available from Mitsui Chemicals, Inc.) to prepare a resin composition (X-1). The molar ratio (NCO/OH) in the resin composition (X-1) was 0.80.

The resin composition (X-1) prepared as described above was applied to one surface of a release PET film. Carbon fibers ("TRK 979PQRW", available from Mitsubishi Rayon Co., Ltd.) were placed thereon and impregnated therewith in such a manner that the carbon fiber content was 50% by mass. The same release PET film was placed thereon. The resulting stack was heated at 45°C for 5 hours, allowed to stand at room temperature for three days, and stored to produce a prepreg (1). The prepreg (1) had a thickness of 0.25 mm.

### [Evaluation of Workability (Tackiness)]

The workability when the prepreg (1) produced as described above was peeled from the release film at room temperature was evaluated according to criteria listed below. ○: The resin did not adhere to the release film. ×: The resin adhered to the release film.

### [Production of Molded Article]

The prepreg (1) produced as described above was peeled from the films. Eight sheets of the prepreg (1) were stacked. The stack was placed in the middle of a flat die set and molded with a compression molding machine at a pressure of 4.9 MPa, a top die temperature of 145°C, a bottom die temperature of 140°C, a molding time of 5 minutes to produce a molded article (1) having a flat-plate shape and dimensions of 300 mm wide × 300 mm × 2 mm.

### [Evaluation of Moldability]

The difference in carbon fiber content between the prepreg (1) and the molded article (1) produced as described above was measured, and the moldability was evaluated according to criteria listed below.
○: The difference in carbon fiber content was less than 5%.
×: The difference in carbon fiber content was 5% or more.

### [Interlaminar Shear Strength of Molded Article]

A test piece having a width of 10 mm and a length of 22 mm was cut out from the molded article (1) produced as described above. The interlaminar shear strength of the test piece was measured according to JIS K7078 and evaluated according to criteria listed below.
⊙: 70 MPa or more
○: 60 MPa or more and less than 70 MPa
Δ: 50 MPa or more and less than 60 MPa
×: Less than 50 MPa

### [Heat Resistance]

A test piece having a width of 5 mm and a length of 55 mm was cut out from the molded article (1) produced as described above. The dynamic viscoelasticity of the test piece was measured by the dual cantilever bending of the cured product with "DMS 6100" available from SII NanoTechnology Inc., at a measurement frequency of 1 Hz and a rate of temperature increase of 3 °C/min. In the resulting storage modulus chart, the point of intersection of an approximate straight line in a glass region and the tangent of a transition region was defined as a glass transition temperature. The heat resistance was evaluated according to criteria listed below.
⊙: A glass transition temperature of 130°C or higher
○: A glass transition temperature of 120°C or higher and lower than 130°C
Δ: A glass transition temperature of 110°C or higher and lower than 120°C
×: A glass transition temperature of lower than 110°C

### (Example 2: Production and Evaluation of Prepreg (2))

A resin composition (X-2) was prepared in the same way as in Example 1, except that the amount of 4,4'-MDI (average number of isocyanate groups per molecule: 2, available from Mitsui Chemicals, Inc.) used in Example 1 was changed from 27.8 parts by mass to 34.8 parts by mass. The molar ratio (NCO/OH) in the resin composition (X-2) was 1.0.

A prepreg (2) and a molded article (2) were produced in the same way as in Example 1, except that the resin composition (X-1) used in Example 1 was changed to the resin composition (X-2). The evaluations were then performed.

### (Example 3: Production and Evaluation of Prepreg (3))

A resin composition (X-3) was prepared in the same way as in Example 1, except that the amount of 4,4'-MDI (average number of isocyanate groups per molecule: 2, available from Mitsui Chemicals, Inc.) used in Example 1 was changed from 27.8 parts by mass to 20.9 parts by mass. The molar ratio (NCO/OH) in the resin composition (X-3) was 0.6.

A prepreg (3) and a molded article (3) were produced in the same way as in Example 1, except that the resin composition (X-1) used in Example 1 was changed to the resin composition (X-3). The evaluations were then performed.

### (Example 4: Production and Evaluation of Prepreg (4))

A resin composition (X-4) was prepared in the same way as in Example 1, except that phenoxyethyl methacrylate used in Example 1 was changed to benzyl methacrylate. The molar ratio (NCO/OH) in the resin composition (X-4) was 0.8.

A prepreg (4) and a molded article (4) were produced in the same way as in Example 1, except that the resin composition (X-1) used in Example 1 was changed to the resin composition (X-4). The evaluations were then performed.

### (Example 5: Production and Evaluation of Prepreg (5))

A resin composition (X-5) was prepared in the same way as in Example 1, except that 27.8 parts by mass of 4,4'-MDI (average number of isocyanate groups per molecule: 2, available from Mitsui Chemicals, Inc.) used in Example 1 was changed to 18.7 parts by mass of HDI. The molar ratio (NCO/OH) in the resin composition (X-5) was 0.8.

A prepreg (5) and a molded article (5) were produced in the same way as in Example 1, except that the resin composition (X-1) used in Example 1 was changed to the resin composition (X-5). The evaluations were then performed.

### (Reference Example 6: Production and Evaluation of Prepreg (6))

A resin composition (X-6) was prepared in the same way as in Example 1, except that phenoxyethyl methacrylate used in Example 1 was changed to styrene. The molar ratio (NCO/OH) in the resin composition (X-6) was 0.8.

A prepreg (6) and a molded article (6) were produced in the same way as in Example 1, except that the resin composition (X-1) used in Example 1 was changed to the resin composition (X-6). The evaluations were then performed.

### (Example 7: Production and Evaluation of Prepreg (7))

A resin composition (X-7) was prepared in the same way as in Example 1, except that epoxy methacrylate (a1-1) used in Example 1 was changed to epoxy methacrylate (a1-2) and that 27.8 parts by mass of 4,4'-MDI (average number of isocyanate groups per molecule: 2, available from Mitsui Chemicals, Inc.) used in Example 1 was changed to 37.2 parts by mass of an HDI-based isocyanurate ("Duranate TKA-100", average number of isocyanate groups per molecule: 3, available from Asahi Kasei Chemicals Corporation). The molar ratio (NCO/OH) in the resin composition (X-7) was 0.7.

A prepreg (7) and a molded article (7) were produced in the same way as in Example 1, except that the resin composition (X-1) used in Example 1 was changed to the resin composition (X-7). The evaluations were then performed.

### (Comparative Example 1: Production and Evaluation of Prepreg (R1))

A resin composition (RX-1) was prepared in the same way as in Example 1, except that epoxy methacrylate (a1-1) used in Example 1 was changed to epoxy methacrylate (Ra1-1) and that the amount of 4,4'-MDI (average number of isocyanate groups per molecule: 2, available from Mitsui Chemicals, Inc.) was changed from 27.8 parts by mass to 25.6 parts by mass. The molar ratio (NCO/OH) in the resin composition (RX-1) was 0.8.

A prepreg (R1) and a molded article (R1) were produced in the same way as in Example 1, except that the resin composition (X-1) used in Example 1 was changed to the resin composition (RX-1). The evaluations were then performed.

### (Comparative Example 2: Production and Evaluation of Prepreg (R2))

A resin composition (RX-2) was prepared in the same way as in Example 1, except that 70 parts by mass of epoxy methacrylate (a1-1) and 30 parts by mass of phenoxyethyl methacrylate used in Example 1 were changed to 95 parts by mass of epoxy methacrylate (a1-1) and 5 parts by mass of phenoxyethyl methacrylate, respectively, and that the amount of 4,4'-MDI (average number of isocyanate groups per molecule: 2, available from Mitsui Chemicals, Inc.) was changed from 27.8 parts by mass to 37.8 parts by mass. The molar ratio (NCO/OH) in the resin composition (RX-2) was 0.8.

A prepreg (R2) and a molded article (R2) were produced in the same way as in Example 1, except that the resin composition (X-1) used in Example 1 was changed to the resin composition (RX-2). The evaluations were then performed.

### (Comparative Example 3: Production and Evaluation of Prepreg (R3))

A resin composition (RX-3) was prepared in the same way as in Example 1, except that 70 parts by mass of epoxy methacrylate (a1-1) and 30 parts by mass of phenoxyethyl methacrylate used in Example 1 were changed to 40 parts by mass of epoxy methacrylate (a1-1) and 60 parts by mass of phenoxyethyl methacrylate, respectively, and that the amount of 4,4'-MDI (average number of isocyanate groups per molecule: 2, available from Mitsui Chemicals, Inc.) was changed from 27.8 parts by mass to 15.9 parts by mass. The molar ratio (NCO/OH) in the resin composition (RX-3) was 0.8.

A prepreg (R3) and a molded article (R3) were produced in the same way as in Example 1, except that the resin composition (X-1) used in Example 1 was changed to the resin composition (RX-3). The evaluations were then performed.

### (Comparative Example 4: Production and Evaluation of Prepreg (R4))

A resin composition (RX-4) was prepared in the same way as in Example 1, except that the amount of 4,4'-MDI (average number of isocyanate groups per molecule: 2, available from Mitsui Chemicals, Inc.) used in Example 1 was changed from 27.8 parts by mass to 17.4 parts by mass. The molar ratio (NCO/OH) in the resin composition (RX-4) was 0.5.

A prepreg (R4) and a molded article (R4) were produced in the same way as in Example 1, except that the resin composition (X-1) used in Example 1 was changed to the resin composition (RX-4). The evaluations were then performed.

Table 1 lists the evaluation results of the prepregs (1) to (7) produced as described above.

**[Table 1]**

| Table 1 | Example 1 | Example 2 | Example 3 | Example 4 | Example 5 | Reference Example 6 | Example 7 |
|---|---|---|---|---|---|---|---|
| Prepreg | (1) | (2) | (3) | (4) | (5) | (6) | (7) |
| Epoxy (meth)acrylate | (a1-1) | (a1-1) | (a1-1) | (a1-1) | (a1-1) | (a1-1) | (a1-2) |
| Average number of hydroxy groups in epoxy (meth)acrylate | 2.2 | 2.2 | 2.2 | 2.2 | 2.2 | 2.2 | 2.0 |
| Polyisocyanate | 4,4'-MDI | 4,4'-MDI | 4,4'-MDI | 4,4'-MDI | HDI | 4,4'-MDI | TKA-100 |
| Average number of isocyanate groups in polyisocyanate | 2 | 2 | 2 | 2 | 2 | 2 | 3 |
| Ethylenically unsaturated monomer | phenoxyethyl methacrylate | phenoxyethyl methacrylate | phenoxyethyl methacrylate | benzyl methacrylate | phenoxyethyl methacrylate | styrene | phenoxyethyl methacrylate |
| Molecular weight | 206 | 206 | 206 | 176.5 | 206 | 104 | 206 |
| Percent by mass of ethylenically unsaturated monomer | 30 | 30 | 30 | 30 | 30 | 30 | 30 |
| Molar ratio (NCO/OH) | 0.8 | 0.6 | 1.0 | 0.8 | 0.8 | 0.8 | 0.7 |
| Workability (tackiness) | ○ | ○ | ○ | ○ | ○ | ○ | ○ |
| Moldability | ⊙ | ○ | ⊙ | ⊙ | ⊙ | ○ | ⊙ |
| (difference in carbon fiber content) | 2% | 5% | 1% | 2% | 2% | 3% | 1% |
| Interlaminar shear strength | ⊙ | ○ | ⊙ | ⊙ | ○ | Δ | ○ |
| | 73 MPa | 64 MPa | 70 MPa | 74 MPa | 69 MPa | 52 MPa | 60 MPa |
| Heat resistance | ⊙ | ○ | ⊙ | ⊙ | ○ | ⊙ | ○ |
| (glass transition temperature) | 132°C | 125°C | 135°C | 132°C | 127°C | 136°C | 128°C |

Table 2 lists the evaluation results of the prepregs (R1) to (R4) produced as described above.

**[Table 2]**

| Table 2 | Comparative example 1 | Comparative example 2 | Comparative example 3 | Comparative example 4 |
|---|---|---|---|---|
| Prepreg | (R1) | (R2) | (R3) | (R4) |
| Epoxy (meth)acrylate | (Ra1-1) | (a1-1) | (a1-1) | (a1-1) |
| Average number of hydroxy groups in epoxy (meth)acrylate | 4.1 | 2.2 | 2.2 | 2.2 |
| Polyisocyanate | 4,4'-MDI | 4,4'-MDI | 4,4'-MDI | 4,4'-MDI |
| Average number of isocyanate groups in polyisocyanate | 2 | 2 | 2 | 2 |
| Ethylenically unsaturated monomer | phenoxyethyl methacrylate | phenoxyethyl methacrylate | phenoxyethyl methacrylate | phenoxyethyl methacrylate |
| Molecular weight | 206 | 206 | 206 | 206 |
| Percent by mass of ethylenically unsaturated monomer | 30 | 5 | 60 | 30 |
| Molar ratio (NCO/OH) | 0.8 | 0.8 | 0.8 | 0.5 |
| Workability (tackiness) | ○ | ○ | × | × |
| Moldability | ⊙ | ○ | × | × |
| (difference in carbon fiber content) | 1% | 3% | 8% | 7% |
| Interlaminar shear strength | × | × | Δ | ○ |
| | 45 MPa | 38 MPa | 55 MPa | 62 MPa |
| Heat resistance | ⊙ | × | × | × |
| (glass transition temperature) | 139°C | 97°C | 105°C | 110°C |

It was found that the prepregs of Examples 1 to 5 and 7 according to the present invention had good workability and good moldability and that the resulting molded articles had good interlaminar shear strength and good heat resistance.

It was found that in Comparative example 1 in which the average number of hydroxy groups in epoxy (meth)acrylate per molecule was more than 2.6, which is the upper limit, the molded article had insufficient interlaminar shear strength.

It was found that in Comparative example 2 in which the content of the ethylenically unsaturated monomer was less than 10% by mass, which is the lower limit, the molded article had insufficient interlaminar shear strength and insufficient heat resistance.

It was found that in Comparative example 3 in which the content of the ethylenically unsaturated monomer was more than 50% by mass, which is the upper limit, the workability and the moldability were insufficient, and the molded article had insufficient heat resistance.

It was found that in Comparative example 4 in which the molar ratio (NCO/OH) was less than 0.6, which is the lower limit, the workability and the moldability were insufficient, and the molded article had insufficient heat resistance.

## Claims

1. A prepreg comprising a urethane-modified epoxy (meth)acrylate (A) that is a reaction product of an epoxy (meth)acrylate (a1) having an average of 1.8 to 2.6 hydroxy groups per molecule and a polyisocyanate (a2) having an average of 2 to 3 isocyanate groups per molecule, an ethylenically unsaturated monomer (B), a polymerization initiator (C), and reinforcing fibers (D) as essential components, wherein
the molar ratio (NCO/OH) of isocyanate groups (NCO) in the polyisocyanate (a2) to hydroxy groups in the epoxy (meth)acrylate (a1) is 0.6 to 1.1,
the proportion of the ethylenically unsaturated monomer (B) in a total mass of the epoxy (meth)acrylate (a1) and the ethylenically unsaturated monomer (B) is 10% to 50% by mass,
the ethylenically unsaturated monomer (B) is a monofunctional (meth)acrylate having a molecular weight of 150 to 250, and the reinforcing fibers (D) are carbon fibers and/or glass fibers.

2. The prepreg according to claim 1, wherein the ethylenically unsaturated monomer (B) is phenoxyethyl (meth)acrylate and/or benzyl (meth)acrylate.

3. The prepreg according to claim 1 or 2, wherein the prepreg has a thickness of 0.02 to 1mm.

4. A molded article comprising a cured product of the prepreg according to any one of claims 1 to 3.

## Patentansprüche

1. Ein Prepreg, das ein Urethan-modifiziertes Epoxy(meth)acrylat (A), das ein Reaktionsprodukt aus einem Epoxy(meth)acrylat (a1), welches einen Durchschnitt von 1,8 bis 2,6 Hydroxygruppen pro Molekül aufweist, und einem Polyisocyanat (a2), welches einen Durchschnitt von 2 bis 3 Isocyanatgruppen pro Molekül aufweist, ist, ein ethylenisch ungesättigtes Monomer (B), einen Polymerisationsinitiator (C), und Verstärkungsfasern (D) als essenzielle Komponenten umfasst, wobei
das Molverhältnis (NCO/OH) der Isocyanatgruppen (NCO) im Polyisocyanat (a2) zu den Hydroxygruppen im Epoxy(meth)acrylat (a1) 0,6 bis 1,1 ist,
der Anteil des ethylenisch ungesättigten Monomers (B) in einer Gesamtmasse des Epoxy(meth)acrylats (a1) und des ethylenisch ungesättigten Monomers (B) 10 bis 50 Gewichts-% ist,
das ethylenisch ungesättigte Monomer (B) ein monofunktionelles (Meth)acrylat ist, das ein Molgewicht von 150 bis 250 aufweist, und die Verstärkungsfasern (D) Carbonfasern und/oder Glasfasern sind.

2. Prepreg gemäß Anspruch 1, wobei das ethylenisch ungesättigte Monomer (B) Phenoxyethyl(meth)acrylat und/oder Benzyl(meth)acrylat ist.

3. Prepreg gemäß Anspruch 1 oder 2, wobei das Prepreg eine Dicke von 0,02 bis 1 mm aufweist.

4. Ein Formteil, das ein ausgehärtetes Produkt des Prepreg gemäß einem der Ansprüche 1 bis 3 umfasst.

## Revendications

1. Préimprégné comprenant un époxy(méth)acrylate à modification uréthane (A) qui est le produit de la réaction d'un époxy(méth)acrylate (a1) ayant en moyenne 1,8 à 2,6 groupes hydroxy par molécule et d'un polyisocyanate (a2) ayant en moyenne 2 à 3 groupes isocyanate par molécule, un monomère à insaturation éthylénique (B), un amorceur de polymérisation (C), et des fibres de renforcement (D), en tant que composants essentiels, dans lequel
le rapport molaire (NCO/OH) des groupes isocyanate (NCO) dans le polyisocyanate (a2) aux groupes hydroxy dans l'époxy(méth)acrylate (a1) est de 0,6 à 1,1.
la proportion du monomère à insaturation éthylénique (B) dans la masse totale de l'époxy(méth)acrylate (a1) et du monomère à insaturation éthylénique (B) est de 10 % à 50 % en masse,
le monomère à insaturation éthylénique (B) est un (méth)acrylate monofonctionnel ayant une masse moléculaire de 150 à 250, et les fibres de renforcement (D) sont des fibres de carbone et/ou des fibres de verre.

2. Préimprégné selon la revendication 1, dans lequel le monomère à insaturation éthylénique (B) est le (méth)acrylate de phénoxyéthyle et/ou le (méth)acrylate de benzyle.

3. Préimprégné selon la revendication 1 ou 2, lequel préimprégné a une épaisseur de 0,02 à 1 mm.

4. Article moulé comprenant un produit durci du préimprégné selon l'une quelconque des revendications 1 à 3.
